# EUROPÄISCHE PATENTSCHRIFT

(11) **EP 2 066 509 B1**
(45) Veröffentlichungstag und Bekanntmachung des Hinweises auf die Patenterteilung: **15.12.2010**
(21) Anmeldenummer: 07802392.6
(22) Anmeldetag: 23.07.2007
(51) Int. Cl.: B60H 3/00

(54) **KLIMAANLAGE MIT GASSENSOR FÜR EIN FAHRZEUG UND VERFAHREN ZUM BETREIBEN EINER DERARTIGEN KLIMAANLAGE**
AIR CONDITIONING SYSTEM WITH GAS SENSOR FOR A VEHICLE AND METHOD FOR OPERATING SUCH AN AIR CONDITIONING SYSTEM
INSTALLATION DE CLIMATISATION AVEC CAPTEUR DE GAZ POUR UN VÉHICULE, ET PROCÉDÉ D'EXPLOITATION D'UNE TELLE INSTALLATION DE CLIMATISATION

(30) Priorität: 20.09.2006 DE 102006044083
(43) Veröffentlichungstag der Anmeldung: 10.06.2009
(73) Patentinhaber: Robert Bosch GmbH, 70442 Stuttgart (DE)
(72) Erfinder: ARNDT, Michael, 72762 Reutlingen (DE); SAUER, Maximilian, 78464 Konstanz (DE)
(86) Internationale Anmeldenummer: PCT/EP2007/057553
(87) Internationale Veröffentlichungsnummer: WO 2008/034658

(56) Entgegenhaltungen:
- DE-A1- 10 316 352
- DE-A1-102004 024 284
- US-A- 5 084 659

## Beschreibung

### Stand der Technik

Klimaanlagen von Kraftfahrzeugen weisen im Allgemeinen eine Umluftklappe zur Verstellung zwischen einem Umluftbetrieb mit fahrzeuginterner Zirkulation und einem Außenluftbetrieb mit Ventilation von Außenluft in den Fahrgastraum und Ausgabe der Innenluft an den Außenraum auf.

In Fahrzeugen werden zum Teil Gassensoren zur Überwachung der Außenluft eingesetzt, um die Umluftklappe der Klimaanlage zu schließen, wenn außerhalb des Fahrzeuges eine erhöhte Schadstoffkonzentration vorherrscht.

Weiterhin ist die Verwendung von Gassensoren zur Überwachung der Innenraumluft vorgesehen, um den Kohlendioxid-Gehalt zu überprüfen, der zum einen durch die Atemtätigkeit der Insassen und zum anderen auch durch Leckagen von Klimaanlagen mit Kohlendioxid-haltigem Klimamittel beeinflusst wird. Die entstehenden Kohlendioxid-Konzentrationen aufgrund der Atemtätigkeit sind geringer als bei einer Leckage.

Für Gassensoren sind insbesondere spektroskopische Messprinzipien bekannt, bei denen eine Infrarot-Strahlungsquelle, z. B. eine im Niederstrombereich betriebene Glühwendel, Infrarot-Strahlung über eine Messstrecke aussendet, deren Absorption von Infrarotstrahlung nachfolgend in einem Infrarot-Detektor ermittelt wird. Weiterhin sind auch andere Sensorprinzipien wie chemische Sensoren, Halbleiter-Gassensoren, Gas-FETs und andere bekannt. Bei derartigen Gassensoren sind im Allgemeinen die begrenzte Lebensdauer und der hohe Bedarf an Versorgungsenergie problematisch.

Aus der DE 103 16 352 A1 ist eine Klimaanlage nach dem Oberbegriff des Anspruchs 1 bekannt, bei der die Kältemittelkonzentration in dem Luftleitgehäuse der Klimaanlage mittels eines Sensors überwacht wird. Wird dabei eine Undichtigkeit des Kältemittelverdampfers festgestellt, wird die Klimaanlage auf Frischluftbetrieb umgestellt, um ein vollständiges Durchfluten der Fahrgastzelle mit Frischluft zu erreichen.

### Offenbarung der Erfindung

Erfindungsgemäß kann der Gassensor zur Ermittlung der Gaskonzentration, insbesondere der CO₂-Konzentration, im Umluftbetrieb und im Außenluftbetrieb in unterschiedliche Betriebsmodi (Betriebszustände) eingestellt werden.

Bei Klimaanlagen, bei denen ein Kohlendioxid-haltiges Klimamittel (Kältemittel) verwendet wird, können plötzliche Kohlendioxid- Konzentrationserhöhungen auch im Außenluftbetrieb durch die Leckage des Klimamittels auftreten. Somit ist im Umluftbetrieb ein aktiverer Betriebsmodus vorgesehen, bei dem sowohl eine mögliche Leckage als auch eine Konzentrationserhöhung an Kohlendioxid durch die Atemluft der Insassen überwacht wird, und im Außenluftbetrieb ein reduzierter Betriebsmodus mit geringerer Auflösung des Gassensors vorgesehen, bei dem der Gassensor jedoch weiterhin Messsignale ausgibt, um eine CO₂-Erhöhung durch eine Leckage des Klimamittels zu detektieren.

Der reduzierte Betriebsmodus mit geringerer Auflösung kann bei Verwendung eines spektroskopischen Gassensors insbesondere durch eine geringere Bestromung bzw. geringere Energieversorgung des jeweiligen Gassensors und somit ein ungenaues Messsignal erreicht werden.

Ein derart reduzierter Betriebsmodus mit geringerer Auflösung würde zwar keine genaue Regelung bzw. Einstellung der Umluftklappe ermöglichen, da die Gaskonzentration nur grob ermittelt wird. Erfindungsgemäß wird jedoch erkannt, dass im Außenluftbetrieb ein Zustand des beinahe Erreichens eines kritischen Grenzwertes des CO₂-Gehalts auf eine Leckage des Klimamittels zurückzuführen ist und somit auch ein ungenaues bzw. falsches Erkennen eines kritischen Zustands, obwohl der Kohlendioxid-Wert den kritischen Grenzwert noch nicht genau erreicht hat, dennoch zur Ausgabe eines Warnsignals bzw. zum Einleiten von Maßnahmen berechtigt.

Falls ein kritischer Konzentrationswert an Kohlendioxid erkannt wird, kann in allen Betriebsarten der Klimaanlage jeweils ein Warnsignal ausgegeben werden.

Erfindungsgemäß kann weiterhin aus dem zeitlichen Verhalten des Messsignals ermittelt werden, ob durch eine schnelle Zunahme des Kohlendioxid-Gehaltes ggf. auf eine Leckage des Klimamittels geschlossen werden kann, da Erhöhungen aufgrund der Atemtätigkeit der Insassen lediglich zu langsamen Veränderungen führen.

Die Erfindung kann grundsätzlich bereits softwaremäßig realisiert werden, in dem lediglich die Steuereinrichtung entsprechend eingestellt wird, dass sie im Außenluftbetrieb ein Steuersignal für einen niedrig auflösenden Messbetrieb aussendet. Somit kann die Erfindung auch mit relativ geringen Änderungskosten realisiert werden, wobei bestehende Klimaanlagen grundsätzlich mit geringem Aufwand umgerüstet werden können.

Kurze Beschreibung der Zeichnungen
- Fig. 1: zeigt ein Blockdiagramm einer erfindungsgemäßen Klimaanlage;
- Fig. 2: ein Flussdiagramm eines erfindungsgemäßen Verfahrens mit Leckage-Überwachung;
- Fig. 3: ein Flussdiagramm eines nicht erfindungsgemäßen Verfahrens ohne Leckage-Überwachung.

### Ausführungsform der Erfindung

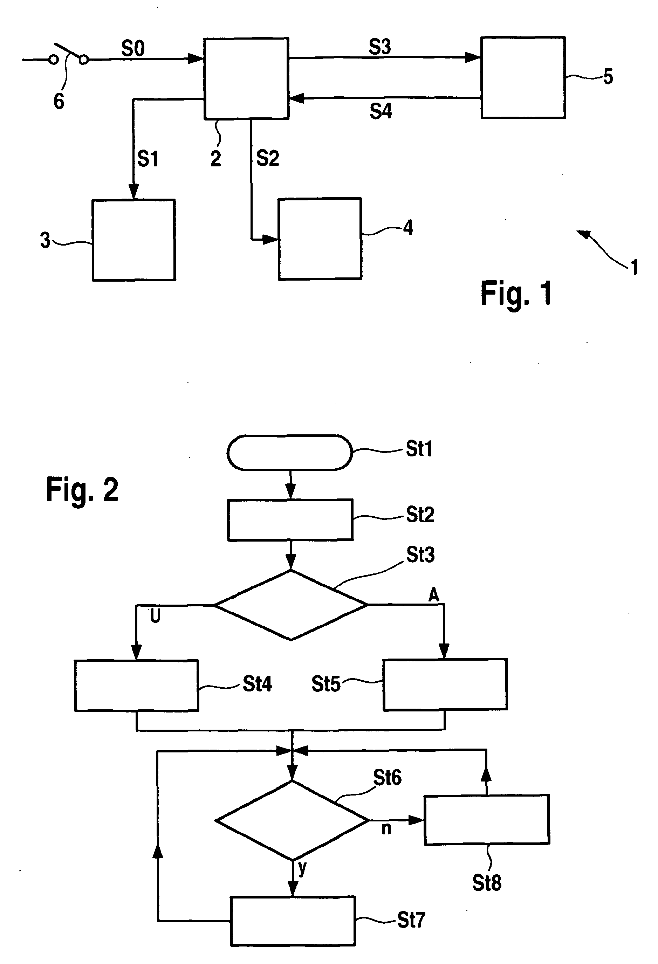

Eine Klimaanlage 1 eines Fahrzeuges weist gemäß Figur 1 eine Steuereinrichtung 2, ein hier nicht näher beschriebenes Klimagerät 3 mit Verdampfer und Gebläse, eine Umluftklappe 4 sowie einen CO₂-Sensor 5 auf. Umluftklappe 4 dient in bekannter Weise zum Umschalten zwischen einem Umluftbetrieb, bei dem das im Fahrgastraum enthaltene Luftvolumen abgeschlossen zirkuliert, und einem Außenluftbetrieb, in dem ein Austausch mit der Luft des Außenraums durchgeführt wird.

Der Benutzer gibt über einen z. B. im Dashboard-Bereich angebrachten Schalter 6 Einstellsignale (Bediensignale) S0 an die Steuereinrichtung 2. In Abhängigkeit der Einstellsignale S0 schaltet die Steuereinrichtung 2 das Klimagerät 3 über erste Steuersignale S1 ein und aus und stellt ggf. die Intensität ein. Weiterhin steuert die Steuereinrichtung 2 über zweite Steuersignale S2 die Umluftklappe 4 an zur Einstellung des Umluftbetriebes oder Außenluftbetriebes. Die Steuerung der Umluftklappe 4 kann bei einer automatischen Klimaanlage 1 auch automatisch, d.h. ohne ein Einstellsignal S0 des Benutzers, erfolgen.

Die Steuereinrichtung 2 steuert auch den Sensor 5 über dritte Steuersignale S3 an; die jeweiligen Steuersignale S3 hängen von der Art bzw. Funktionsweise des Gassensors 5 ab. Der Gassensor 5 kann insbesondere ein spektroskopischer Gassensor sein, der eine IR-Strahlungsquelle, z. B. eine im Niederstrombereich betriebene Glühwendel, eine Messstrecke mit dem zu untersuchenden Luftgemisch und einen spektroskopischen Sensor zur Detektion der wellenlängenabhängigen Absorption der IR-Strahlung in der Messstrecke aufweist. Hierbei kann die Absorption der IR-Strahlung im für CO₂ relevanten Wellenlängenbereich, ggf. ergänzend auch durch weitere Messkanäle die Konzentration von anderen Gasbestandteilen, ermittelt werden. Statt eines spektroskopischen Gassensors kann auch z. B. ein chemischer Sensor vorgesehen sein, der eine der zu untersuchenden Luftmischung ausgesetzte Funktionsschicht mit einer sich in Abhängigkeit der Gaszusammensetzung bzw. Gaskonzentrationen ändernden elektrischen Eigenschaft aufweist, oder z. B. ein Halbleiter-Gassensor, Gas-FET, oder ein anderer Gassensor sein. Der Gassensor 5 gibt entsprechend Messsignale S4 mit den relevanten Konzentrationswerten an die Steuereinrichtung 2 zurück. Erfindungsgemäß kann der Gassensor 5 von der Steuereinrichtung 2 durch die Steuersignale S3 während des Betriebes der Klimaanlage in unterschiedliche Betriebsmodi eingestellt werden. Die Art und Anzahl der Betriebsmodi kann hierbei von der Art und Funktionsweise des Gassensors 5 sowie dem Klimagerät 3, insbesondere dem Klimamittel bzw. Verdampfungsmittel des Klimagerätes 3, abhängen. Hierbei ist insbesondere relevant, ob eine Leckage eines CO₂-haltigen Klimamittels des Klimagerätes 3 mit untersucht werden soll; dies ist insbesondere bei Klimageräten relevant, bei denen eine Leckage des CO₂-haltigen Klimamittels zu einer deutlichen, ggf. gesundheitsgefährdenden Erhöhung der CO₂-Konzentration in der Innenluft führen kann.

Weiterhin können unterschiedliche Betriebsmodi, insbesondere auch reduzierte Betriebsmodi, in Abhängigkeit des jeweils verwendeten Gassensors 5 ausgewählt werden.

Nachfolgend wird der Betrieb einer nicht erfindungsgemäßen Klimaanlage 1 mit einem Klimagerät 3 beschrieben, das nicht auf Leckage zu untersuchen ist; hierbei kann insbesondere ein anderes Klimamittel als CO₂ vorgesehen sein. Für diesen Fall wird erkannt, dass eine schädliche CO₂-Konzentration nur im Umluftbetrieb der Klimaanlage 1 auftreten kann, da im Außenluftbetrieb die Durchlüftung ausreicht, um die CO₂-Konzentration hinreichend gering zu halten.

Die Steuereinrichtung 2 schaltet daher den Gassensor 5 nur im Umluftbetrieb, d.h. wenn die Umluftklappe 4 in die Umluftstellung eingestellt ist, in seinen Betriebsmodus, bei dem bei Verwendung eines spektroskopischen Gassensors 5 die IR-Strahlungsquelle vollständig bestromt wird und fortlaufend Messsignale S4 an die Steuereinrichtung 2 ausgegeben werden. Falls das Messsignal S4 eine erhöhte CO₂-Konzentration anzeigt, kann über ein entsprechendes Steuersignal S2 von Umluftbetrieb auf den Außenluftbetrieb umgeschaltet werden, ggf. das Klimagerät 3 über ein Steuersignal S1 ausgeschaltet werden und ein Warnsignal ausgegeben werden.

Falls die Umluftklappe 4 auf Außenluftbetrieb eingestellt ist, schaltet die Steuereinrichtung 2 über ein entsprechendes Steuersignal S3 den Gassensor 5 entweder in einen Lebensdauer verlängernden und energiesparenden Standby-Betrieb oder sie schaltet den Gassensor 5 vollständig aus.

Im Standby-Betrieb überwacht der z. B. über den CAN-Bus angeschlossene Gassensor 5 lediglich seine Sensorschnittstelle auf ein Aufwecksignal hin, wobei alle anderen Funktionen, bei einem spektroskopischen Gassensor insbesondere die Bestromung der IR-Strahlungsquelle, abgeschaltet sind. Bei einem chemischen Gassensor 5 wird z. B. das chemische Sensorelement nicht beheizt und hierdurch geschont. Die in dem Gassensor 5 vorgesehene Steuerelektronik kann ganz oder teilweise abgeschaltet werden.

Bei Fahrzeugen, bei denen der Gassensor 5 auch eine Leckage des Klimamittels des Klimagerätes 3 überwachen soll, wird erfindungsgemäß der Gassensor 5 sowohl im Umluft- als auch im Außenluftbetrieb betrieben und nicht vollständig ausgeschaltet. Erfindungsgemäß wird jedoch erkannt, dass im Außenluftbetrieb ein niedrig auflösender Messbetrieb möglich ist, da dieser zum Nachweis einer Leckage des Klimagerätes 3 ausreichend ist und in anderen Fällen keine relevanten CO₂-Konzentrationen zu erwarten sind. Die Steuereinrichtung 2 stellt daher in Abhängigkeit der Stellung der Umluftklappe 4 den Gassensor 5 über entsprechende Steuersignale S3 bei Umluftbetrieb in einen normalen, hoch auflösenden Betriebsmodus, und bei Außenluftbetrieb in einen reduzierten Betriebsmodus.

Im hoch auflösenden Messbetrieb wird der spektroskopische Gassensor mit einer höheren Versorgungsenergie (Spannung oder Strom) betrieben, so dass die Temperatur der Infrarot-Strahlungsquelle und somit die Intensität in den relevanten Wellenlängenbereichen hoch ist.

Der reduzierte Betriebsmodus kann insbesondere ein niedrig auflösender Messbetrieb sein, bei dem die relevanten Elemente bzw. Bauteile des Gassensors 5 schonender betrieben werden. Bei Verwendung eines spektroskopischen Gassensors 5 kann z. B. eine thermische Infrarot-Strahlungsquelle mit einer geringeren Versorgungsenergie (Spannung oder Strom) betrieben werden, so dass die Temperatur der Infrarot- Strahlungsquelle und somit die Intensität in den relevanten Wellenlängenbereichen sinkt, jedoch die Lebensdauer der Infrarot-Strahlungsquelle und somit des gesamten Gassensors 5 deutlich erhöht wird. Hierdurch sinkt auch der Energiebedarf des Gassensors 5.

Spektroskopische Gassensoren nehmen in der Regel eine Messung der Gaskonzentration über einen Messkanal, der über einen geeigneten Filter die für CO₂ relevanten Wellenlängenbereiche durchlässt, und einen Referenzkanal vor, wobei die Auswertung durch Differenzbildung bzw. das Verhältnis der Signale der beiden Messkanäle erfolgt. Somit ist eine Messung grundsätzlich auch in einem reduzierten Messbetrieb bei geringerer Bestromung der Infrarotstrahlungsquelle möglich, da das Signal beider Messkanäle entsprechend geringer ist. Aufgrund des geringeren Signals und somit schlechteren Signal-Rausch-Verhältnisses erfolgt jedoch eine gröbere Auflösung, die nicht so genaue Messwerte zulässt, wie der normale, hoch auflösende Messbetrieb.

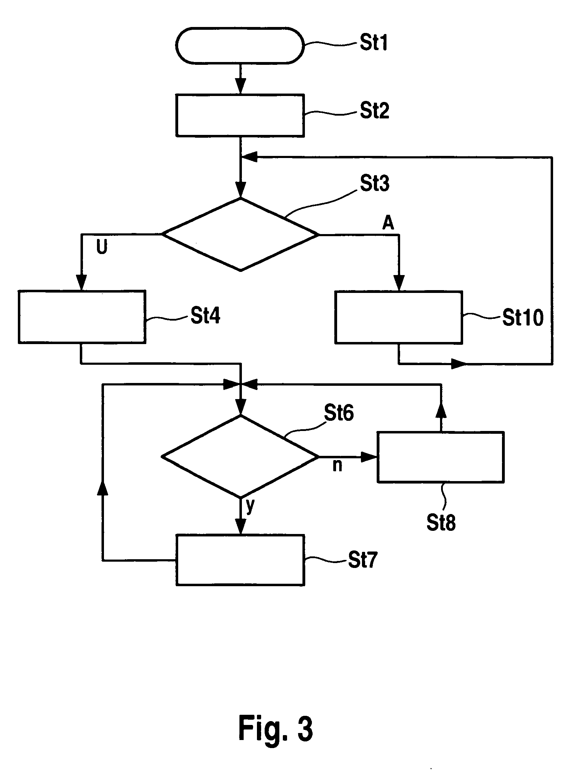

Die Messverfahren sind ergänzend in den Flussdiagrammen der Figuren 2 und 3 beschrieben. Bei der Ausführungsform einer Klimaanlage mit Detektion einer Kühlmittel-Leckage wird das Verfahren in Schritt St1 gestartet, z. B. bei Einschalten der Klimaanlage über den Schalter 6. Die Steuereinrichtung 2 nimmt nachfolgend den Betrieb auf und kann in einem ersten Schritt St2 - unabhängig von der Stellung der Umluftklappe 4 - immer eine vollständige Messung durchführen, d. h. den Gassensor 5 im normalen, hoch auflösenden Betriebsmodus betreiben, um einen anfänglich hohen CO₂-Wert ausschließen zu können.

Nachfolgend wird in dem Entscheidungsschritt St3 die gewählte Umluftklappeneinstellung berücksichtigt:
Bei Umluftbetrieb wird gemäß der linken Verzweigung U in Schritt St4 der normale, hoch auflösende Betriebsmodus des Gassensors 5 eingestellt;
bei Außenluftbetrieb wird gemäß der rechten Verzweigung A in Schritt St5 der reduzierte, niedrig auflösende Betrieb des Gassensors 5 eingestellt;
In beiden Fällen wird nachfolgend gemäß Schritt St6 jeweils überprüft, ob ein zulässiger CO₂-Grenzwert eingehalten wird.

Falls der CO₂-Grenzwert eingehalten wird, wird gemäß Verzweigung y nachfolgend ggf. in Schritt St7 überprüft, ob eine Änderung der Einstellung der Umluftklappe 4 oder eine andere Änderung über die Bedieneinrichtung 6 eingegeben wurde, und das Verfahren wieder zur Überprüfung der CO₂-Konzentration zurückgesetzt vor Schritt St6.

Falls ein Überschreiten des zulässigen CO₂-Grenzwertes festgestellt wird, können gemäß Verzweigung n im nachfolgenden Schritt St8 verschiedene Maßnahmen vorgenommen werden, z. B. unabhängig vom Fahrerwunsch der Außenluftbetrieb eingestellt werden und/oder die Ausgabe eines Warnsignals.

Nachfolgend kann das Verfahren vor den Schritt St6 zurückgesetzt werden.

Figur 3 zeigt das entsprechende Verfahren bei Verwendung einer Klimaanlage, bei der keine Überwachung der Leckage des Klimamittels erfolgt. Hierbei erfolgen die Schritte St1, St2, St3 und St4, weiterhin auch St6, St7, St8 entsprechend Fig.2, nicht jedoch St5.

Bei Auswahl des Außenluftbetriebes wird nach St3 in Schritt St10 der Gassensor 5 in den Standby-Betrieb geschaltet, in dem nur seine Sensorschnittstelle eingeschaltet ist, oder ganz ausgeschaltet, so dass er keine Messsignale S4 ausgibt. Wie durch die Schleife zurück vor den Schritt St3 angezeigt kann eine weitere Signalauswertung erst erfolgen, wenn auf Umluftbetrieb umgeschaltet wird und der Gassensor 5 anschließend angeschaltet wird.

## Patentansprüche

1. Klimaanlage für ein Fahrzeug, die mindestens aufweist:
- ein Klimagerät (3) mit einem Gebläse,
- eine Umluftklappe (4) zur Einstellung eines Umluftbetriebes oder Außenluftbetriebes,
- einen Gassensor (5) zur Messung einer Gaskonzentration, insbesondere einer CO₂-Konzentration, in einem Fahrzeug-Innenraum und Ausgabe eines Messsignals (S4), und
- eine Steuereinrichtung (2) zur Aufnahme des Messsignals (S4) des Gassensors (5), zur Einstellung einer Umluftstellung oder Außenluftstellung der Umluftklappe (4) und zur Steuerung des Gassensors (5),
wobei die Steuereinrichtung (2) den Gassensor (5) in dem Umluftbetrieb in einen anderen Betriebsmodus schaltet als in dem Außenluftbetrieb,
**dadurch gekennzeichnet dass**
die Steuereinrichtung (2) den Gassensor (5) im Umluftbetrieb in einen Betriebsmodus mit höherer Auflösung und im Außenluftbetrieb in einen Betriebsmodus mit geringerer Auflösung einstellt, wobei der Gassensor (5) in beiden Betriebsmodi Messsignale (S4) an die Steuereinrichtung (2) aussendet.

2. Klimaanlage nach Anspruch 1, **dadurch gekennzeichnet, dass** die Steuereinrichtung (2) den Gassensor (5) in dem Umluftbetrieb in einen Betriebsmodus mit höherem Energieverbrauch und in dem Außenluftbetrieb in einen Betriebsmodus mit geringerem Energieverbrauch schaltet.

3. Klimaanlage nach Anspruch 1 oder 2, **dadurch gekennzeichnet, dass** das Klimagerät (3) ein Kohlendioxid-haltiges Klimamittel aufweist und die Steuereinrichtung (2) aus den Messsignalen (S4) des Gassensors (5) überprüft, ob eine Leckage des Klimamittels vorliegt.

4. Klimaanlage nach einem der Ansprüche 1 bis 3, **dadurch gekennzeichnet, dass** der Gassensor (5) ein spektroskopischer Gassensor (5) mit einer thermischen Infrarot-Strahlungsquelle ist, und die Infrarot-Strahlungsquelle
- im Betriebsmodus mit höherer Auflösung bei einer höheren Temperatur und/oder höheren Energieversorgung und
- im Betriebsmodus mit geringerer Auflösung bei einer niedrigeren Temperatur und/oder geringeren Energieversorgung eingestellt ist.

5. Verfahren zum Betreiben einer Klimaanlage (1), bei dem durch Einstellen einer Umluftklappe (2) entweder ein Umluftbetrieb mit geschlossener Zirkulation des Luftvolumens im Fahrzeug oder ein Außenluftbetrieb mit Zuführung von Außenluft eingestellt wird,
wobei
- Messsignale (S4) eines Gassensors (5) aufgenommen und zur Ermittlung eines Gas-Gehalts, insbesondere eines Kohlendioxid-Gehalts, ausgewertet werden,
- der Gassensor (5) im Außenluftbetrieb in einen anderen Betriebsmodus eingestellt wird als im Umluftbetrieb,
**dadurch gekennzeichnet, dass**
der Gassensor (5) im Umluftbetrieb in einem aktiveren Betriebsmodus mit höherem Energieverbrauch und höherer Auflösung und
im Außenluftbetrieb in einem reduzierten Betriebsmodus mit geringerem Energieverbrauch und geringerer Auflösung betrieben wird,
wobei der Gassensor (5) in beiden Betriebsmodi Messsignale (S4) ausgibt, die auf den Kohlendioxid-Gehalt ausgewertet werden.

6. Verfahren nach Anspruch 5, **dadurch gekennzeichnet, dass** in einem Klimagerät (3) der Klimaanlage (1) ein Kohlendioxid-haltiges Klimamittel verwendet wird und die Messsignale (S4) des Gassensors (5) daraufhin ausgewertet werden, ob eine Leckage des Klimamittels vorliegt.

## Claims

1. Air-conditioning system for a vehicle, which has at least:
- an air-conditioning apparatus (3) with a blower,
- a circulating-air flap (4) for setting a circulating-air operation or outside-air operation,
- a gas sensor (5) for measuring a gas concentration, in particular a CO₂ concentration, in a vehicle interior and for outputting a measurement signal (S4), and
- a control device (2) for receiving the measurement signal (S4) from the gas sensor (5), for setting a circulating-air position or outside-air position of a circulating-air flap (4) and for controlling the gas sensor (5),
the control device (2) switching the gas sensor (5) into a different operating mode in circulating-air operation from that in outside-air operation,
**characterized in that**
the control device (2) sets the gas sensor (5), in circulating-air operation, into an operating mode with higher resolution and, in outside-air operation, into an operating mode with lower resolution, the gas sensor (5) transmitting measurement signals (S4) to the control device (2) in both operating modes.

2. The air-conditioning system according to Claim 1, **characterized in that** the control device (2) switches the gas sensor (5), in circulating-air operation, into an operating mode with higher energy consumption and, in outside-air operation, into an operating mode with lower energy consumption.

3. Air-conditioning system according to Claim 1 or 2, **characterized in that** the air-conditioning apparatus (3) has an air-conditioning agent containing carbon dioxide, and a control device (2) checks, from the measurement signals (S4) of the gas sensor (5), whether there is a leakage of the air-conditioning agent.

4. Air-conditioning system according to one of Claims 1 to 3, **characterized in that** the gas sensor (5) is a spectroscopic gas sensor (5) with a thermal infrared radiation source, and the infrared radiation source is set,
- in the operating mode with higher resolution, at a higher temperature and/or with a higher energy supply, and,
- in the operating mode with lower resolution, at a lower temperature and/or with a lower energy supply.

5. Method for operating an air-conditioning system (1), in which either a circulating-air operation with closed circulation of the air volume in the vehicle or an outside-air operation with a feed of outside air is set by setting a circulating-air flap (4),
- measurement signals (S4) from a gas sensor (5) being received and being evaluated in order to determine a gas content, in particular a carbon dioxide content,
- the gas sensor (5) being set to a different operating mode in outside-air operation from that in circulating-air operation,
**characterized in that**
the gas sensor (5) is operated, in circulating-air operation, in a more active operating mode with higher energy consumption and higher resolution, and, in outside-air operation, in a reduced operating mode with lower energy consumption and lower resolution, in both operating modes the gas sensor (5) transmitting measurement signals (S4) which are evaluated for the carbon dioxide content.

6. Method according to Claim 5, **characterized in that** an air-conditioning agent containing carbon dioxide is used in an air-conditioning apparatus (3) of the air-conditioning system (1), and the measurement signals (S4) from the gas sensor (5) are evaluated as to whether there is a leakage of the air-conditioning agent.

## Revendications

1. Installation de climatisation pour un véhicule, présentant au moins :
- un appareil de climatisation (3) avec une soufflante,
- un clapet d'air de recirculation (4) pour l'ajustement d'un fonctionnement d'air de recirculation ou d'un fonctionnement d'air extérieur,
- un capteur de gaz (5) pour mesurer une concentration en gaz, en particulier une concentration en CO₂, dans un habitacle de véhicule et pour émettre un signal de mesure (S4), et
- un dispositif de commande (2) pour recevoir le signal de mesure (S4) du capteur de gaz (5), pour ajuster une position d'air de recirculation ou une position d'air extérieur du clapet d'air de recirculation (4) et pour commander le capteur de gaz (5),
le dispositif de commande (2) commutant le capteur de gaz (5) en fonctionnement d'air de recirculation dans un autre mode de fonctionnement que dans le fonctionnement d'air extérieur,
**caractérisée en ce que**
le dispositif de commande (2) ajuste le capteur de gaz (5) en fonctionnement d'air de recirculation dans un mode de fonctionnement avec une plus grande résolution et, en fonctionnement d'air extérieur, dans un mode de fonctionnement avec une plus faible résolution, le capteur de gaz (5) envoyant dans les deux modes de fonctionnement, des signaux de mesure (S4) au dispositif de commande (2).

2. Installation de climatisation selon la revendication 1, **caractérisée en ce que** le dispositif de commande (2) commute le capteur de gaz (5) en fonctionnement d'air de recirculation dans un mode de fonctionnement avec une plus grande consommation d'énergie, et en fonctionnement d'air extérieur dans un mode de fonctionnement avec une plus faible consommation d'énergie.

3. Installation de climatisation selon la revendication 1 ou 2, **caractérisée en ce que** l'appareil de climatisation (3) présente un fluide de climatisation contenant du dioxyde de carbone et le dispositif de commande (2) vérifie, à partir des signaux de mesure (S4) du capteur de gaz (5) s'il y a une fuite du fluide de climatisation.

4. Installation de climatisation selon l'une quelconque des revendications 1 à 3, **caractérisée en ce que** le capteur de gaz (5) est un capteur de gaz spectroscopique (5) avec une source de rayonnement infrarouge thermique, et la source de rayonnement infrarouge est ajustée
- en mode de fonctionnement avec une plus grande résolution, à une plus haute température et/ou à une plus haute alimentation en énergie, et
- en mode de fonctionnement avec une plus faible résolution, à une plus basse température et/ou une plus basse alimentation en énergie.

5. Procédé pour faire fonctionner une installation de climatisation (1), dans lequel
par l'ajustement d'un clapet d'air de recirculation (2), soit un fonctionnement d'air de recirculation avec une circulation fermée du volume d'air dans le véhicule, soit un fonctionnement d'air extérieur avec une alimentation en air extérieur sont ajustés,
- des signaux de mesure (S4) d'un capteur de gaz (5) étant reçus et étant analysés pour déterminer une teneur en gaz, en particulier, une teneur en dioxyde de carbone,
- le capteur de gaz (5), en fonctionnement d'air extérieur, étant ajusté dans un autre mode de fonctionnement que dans le fonctionnement d'air de recirculation,
**caractérisé en ce que**
le capteur de gaz (5), en fonctionnement d'air de recirculation fonctionne dans un mode de fonctionnement plus actif avec une plus grande consommation d'énergie et une plus grande résolution et
en fonctionnement d'air extérieur, fonctionne dans un mode de fonctionnement réduit avec une plus faible consommation d'énergie et une plus faible résolution,
le capteur de gaz (5) émettant, dans les deux modes de fonctionnement, des signaux de mesure (S4) qui sont analysés en terme de teneur en dioxyde de carbone.

6. Procédé selon la revendication 5, **caractérisé en ce que** dans un appareil de climatisation (3) de l'installation de climatisation (1), on utilise un fluide de climatisation contenant du dioxyde de carbone et les signaux de mesure (S4) du capteur de gaz (5) sont analysés pour établir s'il existe une fuite de fluide de climatisation.
